# EUROPÄISCHE PATENTSCHRIFT

(11) **EP 1 114 270 B1**
(45) Veröffentlichungstag und Bekanntmachung des Hinweises auf die Patenterteilung: **06.03.2002**
(21) Anmeldenummer: 99940195.3
(22) Anmeldetag: 12.08.1999
(51) Int. Cl.: F16L 11/08, F16L 11/02

(54) **FLEXIBLER STRANGFÖRMIGER HOHLKÖRPER**
HOLLOW BODY IN THE FORM OF A FLEXIBLE BAR
CORPS CREUX EN FORME DE BARRE FLEXIBLE

(30) Priorität: 13.08.1998 DE 19837498
(43) Veröffentlichungstag der Anmeldung: 11.07.2001
(73) Patentinhaber: Aeroquip-Vickers International GmbH, 76532 Baden-Baden (DE)
(72) Erfinder: ENDERS, Silvia, D-76532 Baden-Baden (DE); ULLRICH, Holger, D-76437 Rastatt (DE); FRITZ, Thomas, D-76593 Gernsbach (DE)
(74) Vertreter: Gleiss, Alf-Olav, Dr.jur. Dipl.-Ing.
(86) Internationale Anmeldenummer: EP9905848
(87) Internationale Veröffentlichungsnummer: WO0009928

(56) Entgegenhaltungen:
- EP-A- 0 375 608
- US-A- 5 008 137

## Beschreibung

Die Erfindung betrifft einen flexiblen strangförmigen Hohlkörper mit einem von einem Mantel umschlossenen Innenraum zum Transport von Medien.

Flexible strangförmige Hohlkörper der gattungsgemäßen Art sind bekannt. Diese nachfolgend auch als Schlauch bezeichneten strangförmigen Hohlkörper werden in vielen Gebieten der Technik zum Transport von flüssigen oder gasförmigen Medien eingesetzt. Bei der Anwendung in klimatechnischen Anlagen, beispielsweise in Kraftfahrzeugen, werden derartige Schläuche zum Transport von Kältemitteln eingesetzt. Kältemittel haben die Eigenschaft, daß diese flüchtig sind, die, wenn diese in die Erdatmosphäre gelangen, zu schädlichen Einflüssen führen. Um das zu vermeiden, sollen natürliche Kältemittel, zum Beispiel CO₂, eingesetzt werden. Bei bekannten Kältemittelschläuchen ist nachteilig, daß diese gegenüber natürlichen Kältemitteln, insbesondere gegenüber Kohlendioxid CO₂, nicht diffusionsdicht sind und eine hohe Permeabilität aufweisen.

Aus der DE 40 20 798 A1 ist ein Schlauch zum Transport von Gas bekannt, der eine innere Schicht aufweist, die eine geringe Gasdurchlässigkeit aufweist. Ferner ist aus der EP 0 375 608 A1 ein flexibles Medientransportrohr bekannt, das eine in den Mantel integrierte Sperrschicht aus einer längslaufend oder spiralförmig angeordneten Metallfolie besitzt, deren Bandkanten überlappen. Hierbei ist nachteilig, daß insbesondere bei hoher Biegebeanspruchung eine Beeinträchtigung der Gasundurchlässigkeit auftreten kann.

Es ist daher Aufgabe der Erfindung, einen flexiblen strangförmigen Hohlkörper der gattungsgemäßen Art zu schaffen, der eine geringe Permeabilität bei gleichzeitiger hoher Flexibilität, im besonderen gegen CO₂, aufweist.

Erfindungsgemäß wird diese Aufgabe durch einen flexiblen strangförmigen Hohlkörper mit den im Anspruch 1 genannten Merkmalen gelöst. Dadurch, daß der Mantel an seiner dem Innenraum zugewandten Mantelfläche eine aus schuppenförmig angeordneten Teilelementen bestehende Sperrschicht aufweist, die für flüchtige Moleküle des zu transportierenden Mediums undurchlässig ist, wird eine Permeation durch den flexiblen strangförmigen Hohlkörper verhindert, zumindest auf einen vernachlässigbar kleinen Wert reduziert. Somit wird es möglich, insbesondere wenn vorzugsweise die flexiblen strangförmigen Hohlkörper als Kältemittelschlauch eingesetzt werden, Kältemittel zu transportieren, ohne daß flüchtige Bestandteile der Kältemittel in die Atmosphäre gelangen können. Eine geringe Permeationsrate gewährleistet gleichzeitig eine zuverlässige Funktion einer mit dem Kältemittel zu versorgenden Kälteanlage. Durch die schuppenartige Anordnung der Teilelemente wird die Flexibilität des Hohlkörpers nicht, beziehungsweise nur unwesentlich beeinträchtigt. Die schuppenartige Anordnung der Teilelemente führt dazu, daß bei einer Biegebeanspruchung des flexiblen strangförmigen Hohlkörpers die Sperrschicht nicht bricht. Ein Brechen beziehungsweise Beschädigen der Sperrschicht würde zu einer Erhöhung der Permeationsrate führen.

Die schuppenartige Ausbildung kann sehr vorteilhaft durch Erzeugen einer entsprechenden Kristallstruktur während eines vorzugsweise vorgesehenen Aufdampfens einer metallischen Sperrschicht erreicht werden.

Die schuppenartige Ausbildung der Kristallstruktur kann vorzugsweise durch Bedampfen einer als Trägerschicht dienenden Lage des Mantels mit einer kristallinen Substanz, beispielsweise aus Metall oder einem Kunststoff erhalten werden. Hierdurch entstehen kristalline, absolut undurchlässige Bereiche (Plättchen) auf der Oberfläche der als Träger dienenden Lage des Mantels. Hierdurch wird erreicht, daß in einem ungedehnten, das heißt unbelasteten Zustand der flexible strangförmige Hohlkörper (Schlauch) fast vollständig undurchlässig gegenüber dem zu führenden Kältemittel ist. Lediglich durch äußerst kleine Nähte zwischen den aufgedampften Plättchen kann es zu einer vernachlässigbar kleinen Permeation kommen. Werden nun die Plättchen so aufgedampft, daß diese überlappen, kann auch bei einer Biegebeanspruchung oder Dehnbeanspruchung des Schlauches ein Überdeckungsgrad der Plättchen sichergestellt werden, so daß auch in einem derartigen Zustand des Schlauches beispielsweise 99 % der gesamten Oberfläche mit den kristallinen Plättchen bedeckt ist.

Insbesondere ist hierdurch vorteilhaft, daß die mit den kristallinen Plättchen versehenen flexiblen strangförmigen Hohlkörper auch im Hochdruckbereich eingesetzt werden können und die geringe Permeabilität erhalten bleibt. Derartige mit der erfindungsgemäßen Sperrschicht versehende Hochdruckdehnschläuche zeichnen sich durch eine hohe Flexibilität, Schwingungsdämpfung und günstige Beeinflussung der Akustik aus, so daß diese Vorteile bei gleichzeitiger Gewährleistung einer geringen Permeabilität genutzt werden können.

Insbesondere läßt sich in Hochdruckdehnschläuchen, die die erfindungsgemäße Sperrschicht aufweisen als Kältemittel Kohlendioxid CO₂ einsetzen. Der Einsatz von Kohlendioxid als Kältemittel in Hochdruckbereichen führt an sich zu dem Problem einer sogenannten dekompressiven Explosion bei plötzlichem Druckabfall. Hierbei kommt es zur schlagartigen Bildung größerer Aggregate des Kältemittels in einem mit dem Kältemittel in Kontakt stehenden Werkstoff. Dies würde zu einer Schädigung beziehungsweise Zerstörung des Werkstoffes führen. Durch die erfindungsgemäße Sperrschicht wird nunmehr erreicht, daß die Schädigung des Werkstoffes, hier des Mantels des flexiblen strangförmigen Hohlkörpers nicht eintreten kann, da eine Permeation von Molekülen des als Kältemittel eingesetzten Kohlendioxids in den Mantel verhindert wird. Insbesondere durch die bereits erwähnte schuppenförmige Anordnung der kristallinen Plättchen wird auch bei einer Hochdruckdehnung die Permeation verhindert beziehungsweise auf ein vernachlässigbares Minimum reduziert.

Ferner ist bevorzugt, wenn die Sperrschicht aus schuppenartig angeordneten Teilelementen besteht, die vorzugsweise in Transportrichtung des Mediums überlappen und/oder koaxial zu einer Längsachse des Hohlkörpers überlappen. Hierdurch wird eine besonders flexible Anordnung der Sperrschicht erreicht, die sich entsprechend einer Werkstoffwahl durch eine besonders niedrige Permeabilität auszeichnet.

In bevorzugter Ausgestaltung der Erfindung ist vorgesehen, daß die Sperrschicht aus Metall oder einem Kunststoff besteht. Hierdurch kann in einfacher Weise in Abstimmung auf das zu transportierende Kältemittel ein Werkstoff ausgesucht werden, der eine besonders gute Sperrwirkung gegenüber flüchtigen Bestandteilen des zu transportierenden Mediums aufweist.

Ferner ist in bevorzugter Ausgestaltung der Erfindung vorgesehen, daß die Sperrschicht mit der Mantelfläche des Mantels kraftschlüssig verbunden ist. Hierdurch wird erreicht, daß während eines späteren bestimmungsgemäßen Einsatzes des flexiblen strangförmigen Hohlkörpers ein Lösen der Sperrschicht von der Mantelfläche verhindert werden kann, so daß eine erreichte geringe Permeabilität aufrechterhalten bleibt. Bevorzugt ist vorgesehen, daß zur Erhöhung einer Haftfestigkeit zwischen der Sperrschicht und der Mantelfläche, die Mantelfläche physikalisch und/oder chemisch behandelt ist. Hierdurch läßt sich vorzugsweise insbesondere eine Aufrauhung erzielen, die einen besseren Haftverbund mit der nachträglich aufgebrachten Sperrschicht gewährleistet.

Insbesondere ist bevorzugt, wenn eine Erhöhung der Haftfestigkeit zwischen der Sperrschicht und der Mantelfläche durch eine Polarisierung oder Aktivierung des Materials des Mantels zumindest im Oberflächenbereich der Mantelfläche erhalten wird. Hierdurch lassen sich entsprechend dem Material des Mantels, der bevorzugterweise aus einem Polymer besteht, polare Gruppen in die molekulare Grundstruktur des Mantels einbauen, die eine Verbesserung der Beschichtung der Mantelfläche mit der Sperrschicht gewährleisten.

Darüber hinaus ist in bevorzugter Ausgestaltung der Erfindung vorgesehen, daß zwischen der Sperrschicht und der Mantelfläche ein zusätzlicher Haftvermittler angeordnet ist. Dieser zusätzliche Haftvermittler führt zu einer besonders festen und dauerhaften kraftschlüssigen Verbindung zwischen der Sperrschicht und dem Mantel, so daß auch bei relativ starker mechanischer Beanspruchung während des bestimmungsgemäßen Einsatzes der Haftverbund zwischen der Sperrschicht und dem Mantel erhalten bleibt, so daß die geringe Permeabilität aufrechterhalten werden kann.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Querschnitt durch einen Kältemittelschlauch und
- Figur 2: einen Längsschnitt durch einen Abschnitt eines Kältemittelschlauchs.

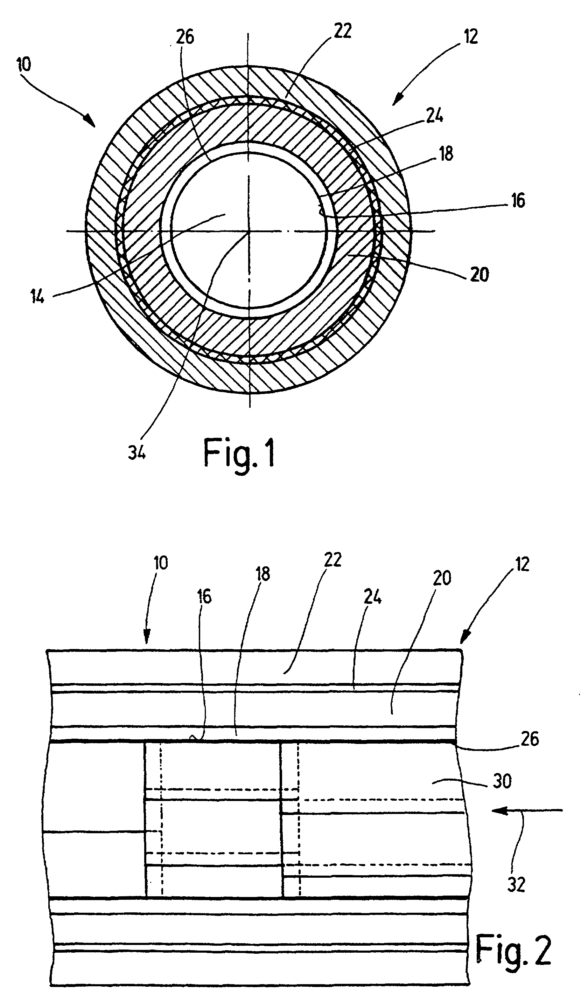

Figur 1 zeigt einen Kältemittelschlauch 10 in einem Querschnitt. Der Kältemittelschlauch 10 umfaßt einen insgesamt mit 12 bezeichneten Mantel, der einen Innenraum 14 umschließt. Der Mantel 12 wird von einem flexiblen strangförmigen Hohlkörper gebildet, wobei eine Mantelfläche 16 des Mantels 12 den Innenraum 14 ausbildet. Der Innenraum 14 ist vorzugsweise kreiszylindrisch ausgebildet, wobei nach weiteren Ausführungsbeispielen dieser auch eine andere Form, beispielsweise oval oder dergleichen, aufweisen kann. Der Mantel 12 ist mehrlagig ausgebildet, wobei die Mantelfläche 16 von einer Innenlage 18 gebildet wird. Um die Innenlage 18 ist eine Mittellage 20 angeordnet, an die sich eine Außenlage 22 anschließt. Zwischen der Mittellage 20 und der Außenlage 22 ist eine Verstärkungslage 24 angeordnet. Die Lagen 18, 20 und 22 des Mantels 12 bestehen beispielsweise aus einem polymeren Material. Die Verstärkungslage 24 besteht beispielsweise aus einer flexiblen gewebearmierten Schicht.

Auf die Mantelfläche 16 ist eine Sperrschicht 26 aufgebracht. Die Sperrschicht 26 ist vollflächig mit der Mantelfläche 16 kraftschlüssig verbunden. Die Sperrschicht 26 kann beispielsweise nach erfolgtem Schichtaufbau des Mantels 12 in den Innenraum 14 eingebracht sein. Nach einem weiteren Ausführungsbeispiel kann die Sperrschicht 26 zunächst auf die Mantelfläche 16 der inneren Lage 18 aufgebracht werden, während die weiteren Lagen 20, 22 sowie 24 nachfolgend, beispielsweise durch Strangextrudieren, aufgebracht werden. Schließlich ist denkbar, auf die Sperrschicht 26 die einzelnen Lagen des Mantels 12 nachträglich aufzubringen.

Die Sperrschicht 26 besteht beispielsweise aus einem Metall oder einem Kunststoff. Das Material der Sperrschicht 26 wird auf ein durch den Innenraum 14 des Kältemittelschlauchs 10 zu transportierendes Kältemittel abgestimmt. Als Kältemittel kommt beispielsweise Kohlendioxid CO₂ in Betracht.

Um eine gute Haftfestigkeit zwischen der Sperrschicht 26 und der inneren Lage 18 zu erreichen, kann die Mantelfläche 16 aufgerauht sein. Dies kann beispielsweise physikalisch, durch mechanisches Angreifen einer geeigneten Vorrichtung, oder chemisch, durch Laugen, Säuren oder dergleichen, erfolgen. Durch die hierdurch erzielte Rauhigkeit wird ein Haftverbund mit der Sperrschicht 26 verbessert. Nach einem weiteren Ausführungsbeispiel kann zwischen der Sperrschicht 26 und der Mantelfläche 16 ein Haftvermittler eingebracht werden. Die Mantelfläche 16 kann zur Erhöhung der Haftfestigkeit auch polarisiert oder aktiviert sein.

In Figur 2 ist ein schematischer Längsschnitt durch den Kältemittelschlauch 10 gezeigt. Gleiche Teile wie in Figur 1 sind mit gleichen Bezugszeichen versehen und nicht nochmals erläutert. Anhand des Längsschnittes soll eine weitere Ausführungsvariante verdeutlicht werden, bei der die Sperrschicht 26 aus einzelnen Teilelementen 30 besteht, die schuppenartig an der Mantelfläche 16 anliegen. Die Mantelfläche 16 kann wiederum, wie bereits bei dem zu Figur 1 erläuterten Ausführungsbeispiel, mechanisch und/oder chemisch aufgerauht sein. Ferner kann ein zusätzlicher Haftvermittler vorgesehen sein. In Figur 2 ist mit einem Pfeil 32 eine gedachte Transportrichtung eines Kältemittels durch den Innenraum 14 angedeutet. Die schuppenförmige Anordnung der Teilelemente 30 der Sperrschicht 26 kann so erfolgen, daß diese sowohl in Transportrichtung 32 überlappen als auch koaxial zu einer Mittelachse 34 (Figur 1) überlappen. Durch die schuppenförmige Anordnung der Sperrschicht 26 wird eine Flexibilität des Kältemittelschlauchs 10 durch Einbringen der Sperrschicht 26 nur unwesentlich beeinflußt. Die schuppenförmig angeordneten Teilelemente 30 können einer Biegebeanspruchung des Mantels 12 ohne weiteres folgen. Durch das Überlappen in Transportrichtung 32 und/oder in koaxialer Richtung zur Längsachse 34 kann einer Biegung des Mantels 12 in allen Raumrichtungen durch die Sperrschicht 26 gefolgt werden.

Insgesamt wird deutlich, daß durch Aufbringen der Sperrschicht 26 auf die den Innenraum 14 begrenzenden Mantelfläche 16 des Mantels 12 ein Kältemittel transportiert werden kann, wobei flüchtige Bestandteile des Kältemittels nicht durch den Mantel 12 diffundieren können. Dieser erhält durch die Sperrschicht 26 eine äußerst geringe Permeabilität für die Moleküle des zu transportierenden Kältemittels. Andererseits wird in umgekehrter Richtung ein Diffundieren von Molekülen in den Innenraum 14 durch die Sperrschicht 26 ebenfalls verhindert.

## Patentansprüche

1. Flexibler strangförmiger Hohlkörper mit einem von einem Mantel (12) umschlossenen Innenraum zum Transport von Medien, mit einer für flüchtige Moleküle des zu transportierenden Mediums undurchlässigen Sperrschicht (26), **dadurch gekennzeichnet, daß** der Mantel (12) an seiner dem Innenraum zugewandten Mantelfläche (16) eine aus schuppenförmig angeordneten Teilelementen (30) bestehende Sperrschicht (26) aufweist.

2. Flexibler strangförmiger Hohlkörper nach Anspruch 1, **dadurch gekennzeichnet, daß** die Teilelemente (30) in Transportrichtung (32) des Mediums überlappen.

3. Flexibler strangförmiger Hohlkörper nach einem der vorhergehenden Ansprüche, **dadurch gekennzeichnet, daß** die Teilelemente (30) koaxial zu einer Längsachse (34) des Mantels (12) überlappen.

4. Flexibler strangförmiger Hohlkörper nach einem der vorhergehenden Ansprüche, **dadurch gekennzeichnet, daß** die Sperrschicht (26) aus Metall besteht.

5. Flexibler strangförmiger Hohlkörper nach einem der Ansprüche 1 bis 3, **dadurch gekennzeichnet, daß** die Sperrschicht (26) aus Kunststoff besteht.

6. Flexibler strangförmiger Hohlkörper nach einem der vorhergehenden Ansprüche, **dadurch gekennzeichnet, daß** die Sperrschicht (26) mit der Mantelfläche (16) kraftschlüssig verbunden ist.

7. Flexibler strangförmiger Hohlkörper nach einem der vorhergehenden Ansprüche, **dadurch gekennzeichnet, daß** die Mantelfläche (16) physikalisch und/oder chemisch zur Erhöhung einer Haftfestigkeit der Sperrschicht (26) behandelt ist.

8. Flexibler strangförmiger Hohlkörper nach einem der vorhergehenden Ansprüche, **dadurch gekennzeichnet, daß** die Mantelfläche (16) aufgerauht ist.

9. Flexibler strangförmiger Hohlkörper nach einem der vorhergehenden Ansprüche, **dadurch gekennzeichnet, daß** das Material des Mantels (12) zumindest im Oberflächenbereich der Mantelfläche (16) polarisiert ist.

10. Flexibler strangförmiger Hohlkörper nach einem der vorhergehenden Ansprüche, **dadurch gekennzeichnet, daß** das Material des Mantels (12) zumindest im Oberflächenbereich der Mantelfläche (16) aktiviert ist.

11. Flexibler strangförmiger Hohlkörper nach einem der vorhergehenden Ansprüche, **dadurch gekennzeichnet, daß** zwischen der Sperrschicht (26) und der Mantelfläche (16) ein Haftvermittler angeordnet ist.

12. Flexibler strangförmiger Hohlkörper nach einem der vorhergehenden Ansprüche, **dadurch gekennzeichnet, daß** der Mantel (12) aus wenigstens einer Lage (18, 20, 22) aus polymerem Werkstoff besteht.

13. Flexibler strangförmiger Hohlkörper nach einem der vorhergehenden Ansprüche, **dadurch gekennzeichnet, daß** der Mantel (12) dreilagig ist.

14. Flexibler strangförmiger Hohlkörper nach einem der vorhergehenden Ansprüche, **dadurch gekennzeichnet, daß** zwischen wenigstens zwei Lagen (20, 22) des Mantels (12) eine Verstärkungslage (24) angeordnet ist.

15. Verwendung eines flexiblen strangförmigen Hohlkörpers nach einem der Ansprüche 1 bis 14 zum Transport eines Kältemittels, insbesondere von Kohlendioxid CO₂.

16. Verwendung eines flexiblen strangförmigen Hohlkörpers nach einem der Ansprüche 1 bis 14 in kältetechnischen Anlagen von Kraftfahrzeugen.

## Claims

1. Hollow body in the form of a flexible bar with an interior space surrounded by a jacket for transportation of media, with a barrier layer which is impermeable to volatile molecules of the transport medium, **characterised in that** jacket (12) exhibits on its jacket surface (16) facing inside towards the interior space a barrier layer (26) consisting of subsidiary components (30).

2. Hollow body in the form of a flexible bar in accordance with Claims 1, **characterised in that** subsidiary components (30) overlap in the direction of transport (32) of the transport medium.

3. Hollow body in the form of a flexible bar in accordance with one of the above-mentioned claims,
**characterised in that** subsidiary elements (30) overlap coaxially with a longitudinal axis (34) of jacket (12).

4. Hollow body in the form of a flexible bar in accordance with one of the above-mentioned claims, **characterised in that** barrier layer (26) is made of metal.

5. Hollow body in the form of a flexible bar in accordance with one of Claims 1 to 3, **characterised in that** barrier layer (26) is made of plastic.

6. Hollow body in the form of a flexible bar in accordance with one of the above-mentioned Claims, **characterised in that** barrier layer (26) has a locked fit with jacket surface (16).

7. Hollow body in the form of a flexible bar in accordance with one of the above-mentioned Claims, **characterised in that** jacket surface (16) is physically and/or chemically treated for purposes of increasing the adhesion of barrier layer (26).

8. Hollow body in the form of a flexible bar in accordance with one of the above-mentioned Claims, **characterised in that** jacket surface (16) is roughened.

9. Hollow body in the form of a flexible bar in accordance with one of the above-mentioned Claims, **characterised in that** the material of jacket (12) is polarised at least in the surface zone of jacket surface (16).

10. Hollow body in the form of a flexible bar in accordance with one of the above-mentioned Claims, **characterised in that** the material of jacket (12) is activated at least in the surface zone of jacket surface (16).

11. Hollow body in the form of a flexible bar in accordance with one of the above-mentioned claims, **characterised in that** a keying agent is arranged between barrier layer (26) and jacket surface (16).

12. Hollow body in the form of a flexible bar in accordance with one of the above-mentioned Claims, **characterised in that** jacket (12) consists of least one ply (18, 20, 22) of a polymer material.

13. Hollow body in the form of a flexible bar in accordance with one of the above-mentioned Claims, **characterised in that** jacket (12) is three-ply.

14. Hollow body in the form of a flexible bar in accordance with one of the above-mentioned Claims, **characterised in that** a reinforcement ply (24) is arranged between at least two plies (20, 22) of jacket (12).

15. Utilisation of a hollow body in the form of a flexible bar in accordance with one of Claims 1 to 14 for transport of a coolant, particularly carbon dioxide CO₂.

16. Utilisation of a hollow body in the form of a flexible bar in accordance with one of Claims 1 to 14 in vehicles' cooling systems.

## Revendications

1. Corps creux en forme de barre flexible comportant un espace intérieur entouré par une enveloppe (12) et prévu pour le transport de fluides, et comportant une couche de blocage (26) imperméable pour des molécules volatiles du fluide à transporter, **caractérisé en ce que** l'enveloppe (12) comporte, sur sa surface enveloppe (16) tournée vers l'espace intérieur, une couche de blocage (26) formée par des éléments partiels (30) disposés à la manière d'écailles.

2. Corps creux en forme de barre flexible selon la revendication 1, **caractérisé en ce que** les éléments partiels (30) se chevauchent dans le sens de transport (32) du fluide.

3. Corps creux en forme de barre flexible selon l'une des revendications précédentes, **caractérisé en ce que** les éléments partiels (30) se chevauchent coaxialement à un axe longitudinal (34) de l'enveloppe (12).

4. Corps creux en forme de barre flexible selon l'une des revendications précédentes, **caractérisé en ce que** la couche de blocage (26) est formée d'un métal.

5. Corps creux en forme de barre flexible selon l'une des revendications 1 à 3, **caractérisé en ce que** la couche de blocage (26) est formée d'une matière plastique.

6. Corps creux en forme de barre flexible selon l'une des revendications précédentes, **caractérisé en ce que** la couche de blocage (26) est reliée selon une liaison par conjugaisons de forces à la surface enveloppe (16).

7. Corps creux en forme de barre flexible selon l'une des revendications précédentes, **caractérisé en ce que** la surface enveloppe (16) est traitée par voie physique et/ou chimique pour que l'adhérence de la couche de blocage (26) soit accrue.

8. Corps creux en forme de barre flexible selon l'une des revendications précédentes, **caractérisé en ce que** la surface enveloppe (16) est rendue rugueuse.

9. Corps creux en forme de barre flexible selon l'une des revendications précédentes, **caractérisé en ce que** le matériau de l'enveloppe (12) est polarisé au moins dans la zone superficielle de la surface enveloppe (16).

10. Corps creux en forme de barre flexible selon l'une des revendications précédentes, **caractérisé en ce que** le matériau de l'enveloppe (12) est activé au moins dans la zone superficielle de la surface enveloppe (16).

11. Corps creux en forme de barre flexible selon l'une des revendications précédentes, **caractérisé en ce qu'**un agent adhésif est disposé entre la couche de blocage (26) et la surface enveloppe (16).

12. Corps creux en forme de barre flexible selon l'une des revendications précédentes, **caractérisé en ce que** l'enveloppe (12) est constituée par au moins une couche (18, 20, 22) d'un matériau polymère.

13. Corps creux en forme de barre flexible selon l'une des revendications précédentes, **caractérisé en ce que** l'enveloppe (12) est formée de trois couches.

14. Corps creux en forme de barre flexible selon l'une des revendications précédentes, **caractérisé en ce qu'**une couche de renfort (24) est disposée entre au moins deux couches (20, 22) de l'enveloppe (12).

15. Utilisation d'un corps creux en forme de barre flexible selon l'une des revendications 1 à 14, pour le transport d'un fluide de refroidissement, notamment de gaz carbonique CO₂.

16. Utilisation d'un corps creux en forme de barre flexible selon l'une des revendications 1 à 14, dans des installations techniques de production de froid dans des véhicules automobiles.
